# DEMANDE DE BREVET EUROPEEN

(11) **EP 4 378 609 A1**
(43) Date de publication de la demande: **05.06.2024**
(21) Numéro de dépôt: 23212253.1
(22) Date de dépôt: 27.11.2023
(51) Int. Cl.: B23D 47/02, B23D 51/02, B27B 9/04

(54) **MACHINE D'USINAGE ET ENSEMBLE DE GUIDAGE POUR UNE TELLE MACHINE**

(30) Priorité: 29.11.2022 CH 14322022
(71) Demandeur: Portmann, Julien, 1700 Fribourg (CH); Portmann, Olivier, 1796 Courgevaux (CH)
(72) Inventeur:
(74) Mandataire: Omnis-IP

(57) **Abrégé**

La présente invention concerne une machine d'usinage (10) comportant un plateau (15), un outil d'usinage (12) et un moteur (14) agencé pour actionner l'outil d'usinage (12). La machine d'usinage (10) est caractérisée en ce qu'elle comporte en outre au moins un élément de guidage amont (16) et au moins un élément de guidage aval (17). L'élément de guidage amont (16) est disposé en amont de l'outil d'usinage (12) et comportant une zone tranchante (23) agencée pour être en contact avec une pièce à usiner lors de l'utilisation de la machine d'usinage. L'élément de guidage aval (17) est disposé en aval de l'outil d'usinage (12) et est agencé pour se déplacer dans un sillon (S) réalisé dans la pièce à usiner lors du passage de l'outil d'usinage dans ladite pièce. Cet élément de guidage aval (17) est simultanément en contact avec les deux côtés du sillon et est agencé pour contraindre ledit élément de guidage aval contre l'un des côtés dudit sillon. La machine d'usinage peut notamment être une scie circulaire électroportative.

## Description

### DOMAINE TECHNIQUE

La présente invention concerne le domaine des machines d'usinage, notamment des machines de coupe et en particulier des scies mécaniques telles que les scies à format, les scies circulaires, les scies sauteuses, etc. Cette invention est particulièrement adaptée aux outils de type électroportatif, mais s'applique également aux machines fixes.

De façon plus détaillée, l'invention concerne une machine d'usinage comportant un plateau, un outil d'usinage et un moteur agencé pour actionner l'outil d'usinage.

L'invention concerne en outre un ensemble de guidage destiné à être adapté à une machine d'usinage telle que décrite ci-dessus.

### ART ANTÉRIEUR

Actuellement, il existe différents types de machines d'usinage destinées à usiner une grande variété de matériaux tels que du bois, en planches ou sous forme de panneaux notamment, des matières plastiques, du plâtre ou des mélanges de matière contenant du plâtre, des matériaux composites et des panneaux comportant différentes couches de matières. Parmi les types d'usinage qui sont couramment réalisés, l'invention s'applique notamment au découpage au moyen d'une scie. Les scies concernées sont en particulier des scies circulaires, des scies sauteuses, des scies à format, des scie à ruban, .... Ces scies comportent généralement un plateau, une lame et un moteur agencé pour actionner la lame dans la pièce à couper. Le plateau comporte généralement un ou deux côtés rectilignes parallèles entre eux et parallèles au parcours effectué par la lame de scie lors d'un découpage rectiligne de la pièce à couper.

Lorsque la machine d'usinage est utilisée pour couper une pièce selon une coupe rectiligne, un élément de guidage tel que par exemple une règle est fixée parallèlement au trait de coupe souhaité. L'un des bords du plateau de la machine est mis en appui contre l'élément de guidage et la lame est actionnée de façon à couper la pièce.

Bien que cette manière de faire soit quasiment systématiquement utilisée, elle présente un certain nombre d'inconvénients. En premier lieu, il peut être difficile de fixer l'élément de guidage de façon efficace. A titre d'exemple, il arrive que l'élément de guidage ne puisse être fixé que par le dessus de la pièce à couper, cette fixation risquant alors d'abimer une surface de cette pièce. Par ailleurs, la fixation efficace de l'élément de guidage peut nécessiter un certain temps. Pour des coupes sur des distances relativement grandes, typiquement au-delà de 4 mètres, il peut être laborieux de fixer une règle ou un élément de guidage tout le long de la coupe.

Généralement, seul l'un des bords du plateau de la machine d'usinage est en appui contre l'élément de guidage. Ce plateau peut dévier de la règle et générer une coupe qui n'est pas rectiligne ou qui n'est pas confondue avec la coupe souhaitée. En utilisant deux éléments de guidage, un pour chaque côté du plateau, il existe un risque de coincement de l'outil de coupe entre les deux éléments de guidage.

Il serait donc intéressant de fournir une machine permettant de réaliser des coupes de pièces parfaitement rectilignes, sans nécessiter la mise en place d'un guide.

### DESCRIPTION DE L'INVENTION

Ce but est atteint par une machine d'usinage telle que définie en préambule et caractérisée en ce qu'elle comporte en outre au moins un élément de guidage amont et au moins un élément de guidage aval, ledit au moins un élément de guidage amont étant disposé en amont de l'outil d'usinage et comportant une zone tranchante agencée pour être en contact avec une pièce à usiner lors de l'utilisation de la machine d'usinage et en ce que ledit élément de guidage aval est disposé en aval de l'outil d'usinage et est agencé pour se déplacer dans un sillon réalisé dans la pièce à usiner lors du passage de l'outil d'usinage dans ladite pièce, cet élément de guidage aval étant agencé pour être simultanément en contact avec les deux côtés dudit sillon et pour contraindre ledit élément de guidage aval contre l'un des côtés dudit sillon.

Le but de l'invention est également atteint par un ensemble de guidage pour une machine d'usinage comportant un plateau, un outil d'usinage et un moteur agencé pour actionner l'outil d'usinage, cet ensemble de guidage étant caractérisée en ce qu'il comporte au moins un élément de guidage amont et au moins un élément de guidage aval, ledit au moins un élément de guidage amont comportant une zone tranchante agencée pour être en contact avec une pièce à usiner lors de l'utilisation de la machine d'usinage et en ce que ledit élément de guidage aval est agencé pour se déplacer dans un sillon réalisé dans la pièce à usiner lors du passage de l'outil d'usinage dans ladite pièce, cet élément de guidage aval étant agencé pour être simultanément en contact avec les deux côtés dudit sillon et pour contraindre ledit élément de guidage aval contre l'un des côtés dudit sillon.

La machine d'usinage selon l'invention permet de réaliser des coupes ou des rainures rectilignes dans différents types de pièces sans qu'il soit nécessaire de fixer un élément de guidage à la pièce à usiner, élément de guidage contre lequel doit être placé un bord du plateau de la machine. Dans le cas où la machine d'usinage est une scie, la machine est positionnée de façon à ce que sa lame soit alignée avec la coupe souhaitée. La machine est ensuite simplement déplacée en la poussant. Cette machine ne dévie ensuite pas de sa course de sorte que la coupe est parfaitement rectiligne. Pour d'autres type de scies, dans lesquelles ce n'est pas la lame qui est déplacée, mais la pièce à usiner, cette pièce à couper est positionnée de façon à aligner la coupe souhaitée avec la lame, puis cette pièce est simplement poussée contre la lame.

Ceci présente plusieurs avantages. Tout d'abord, le temps lié à la mise en place d'un élément de guidage est économisé. Ensuite, les difficultés pratiques qui peuvent être liées à la mise en place d'un tel élément de guidage sont également éliminées. Les risques de déviation de la coupe par rapport à l'élément de guidage sont également supprimés.

Dans certaines applications, il est plus simple de réaliser une coupe qui n'est pas parallèle à un bord de la pièce à couper. Il est également possible de réaliser des coupes rectilignes avec des types de scies avec lesquels de telles coupes sont souvent difficiles à réaliser. Ceci est par exemple le cas pour des scies sauteuses.

Les applications dans lesquelles certaines scies telles que par exemple des scies circulaires électroportatives sont utilisables sont étendues. A titre d'exemple, une scie circulaire électroportatives selon l'invention peut avantageusement remplacer une scie à panneaux. En effet, la coupe étant parfaitement rectiligne sans aucun élément de guidage, les opérations qu'il est possible d'effectuer avec une scie à panneaux conventionnelle peuvent toutes être effectuées avec la machine d'usinage selon l'invention. Une scie à panneau nécessite toutefois une place importante, effectue un nombre très limité de types d'opérations et implique un coût d'achat élevé, contrairement à une scie circulaire selon l'invention.

Avec la machine selon l'invention, il suffit de définir le point de départ de la coupe, de même que son point d'arrivée. La coupe est ensuite réalisée de façon rectiligne en rejoignant ces points de départ et d'arrivée. Cette machine est donc extrêmement simple à utiliser.

L'invention concerne également un ensemble de guidage indépendant d'une machine d'usinage. Cet ensemble de guidage est notamment destiné à être placé sur une machine d'usinage telle que mentionnée ci-dessus. Cet ensemble de guidage est destiné à permettre de transformer une machine d'usinage telle que par exemple une scie conventionnelle, notamment une scie circulaire ou une scie sauteuse, en une machine d'usinage selon l'invention. L'ensemble de guidage peut donc être considéré comme un module qui est fixé sur une scie conventionnelle et qui permet à cette scie conventionnelle d'atteindre les performances obtenues par une scie selon l'invention. En particulier, en fixant un ensemble de guidage selon l'invention sur une scie conventionnelle, il est possible d'utiliser celle-ci pour effectuer des coupes rectilignes, sans devoir appuyer la scie latéralement contre une règle.

Il existe une machine d'usinage de type scie circulaire électroportative comportant un élément de guidage. Cette machine est décrite dans le brevet européen EP 2 638 995. Cette machine comporte, en aval de la lame de scie, un élément de guidage formé d'une pièce métallique ayant sensiblement la largeur du sillon formé par le passage de la lame de scie. Lors de l'utilisation de la scie, la lame coupe la pièce à couper et forme un sillon dans lequel se place l'élément de guidage.

Cet élément de guidage n'assure pas un guidage très précis du déplacement de la scie. En effet, pour éviter d'être coincée dans le sillon, l'élément de guidage a de préférence une largeur inférieure ou tout au plus égale à la largeur de la lame, tout comme un couteau diviseur sur une scie circulaire à format. Il y a ainsi un certain jeu entre l'élément de guidage et le sillon. Cet élément de guidage n'est pas simultanément en contact avec les deux côtés du sillon du fait de ce jeu. Le jeu peut être augmenté du fait que les deux parties de la pièce à couper peuvent s'écarter l'une de l'autre à cause d'une certaine élasticité de la matière. Lors de son utilisation n'importe lequel des côtés de l'élément de guidage peut être en appui contre une face du sillon, ce côté changeant selon le déplacement de la scie. Il en résulte que la machine décrite dans le document EP 2 638 995 ne permet donc pas d'assurer une coupe rectiligne selon un tracé choisi, sans élément de guidage externe.

### BRÈVE DESCRIPTION DES DESSINS

La présente invention et ses avantages seront mieux compris en référence aux figures annexées et à la description détaillée d'un mode de réalisation particulier, dans lesquelles :

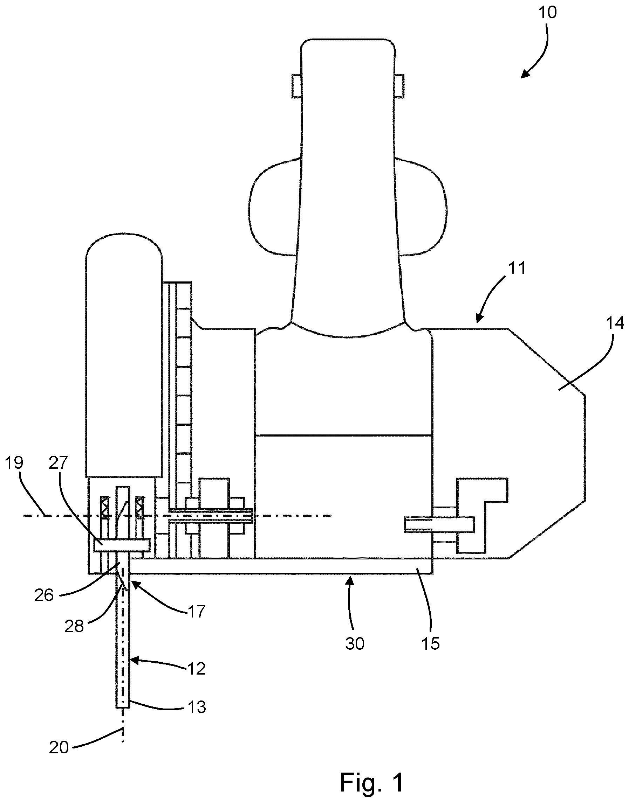

- la figure 1 est une vue de derrière d'une scie circulaire électroportative de l'invention ;

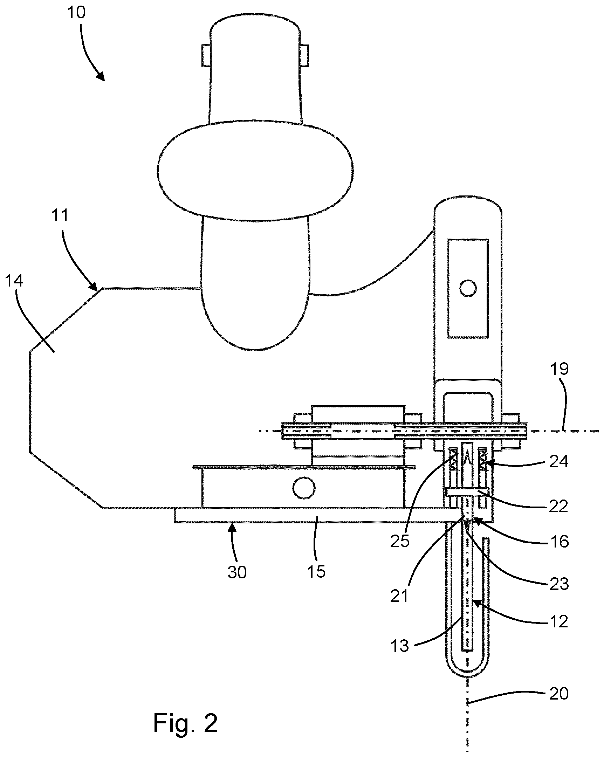

- la figure 2 est une vue de face de la scie de la figure 1 ;

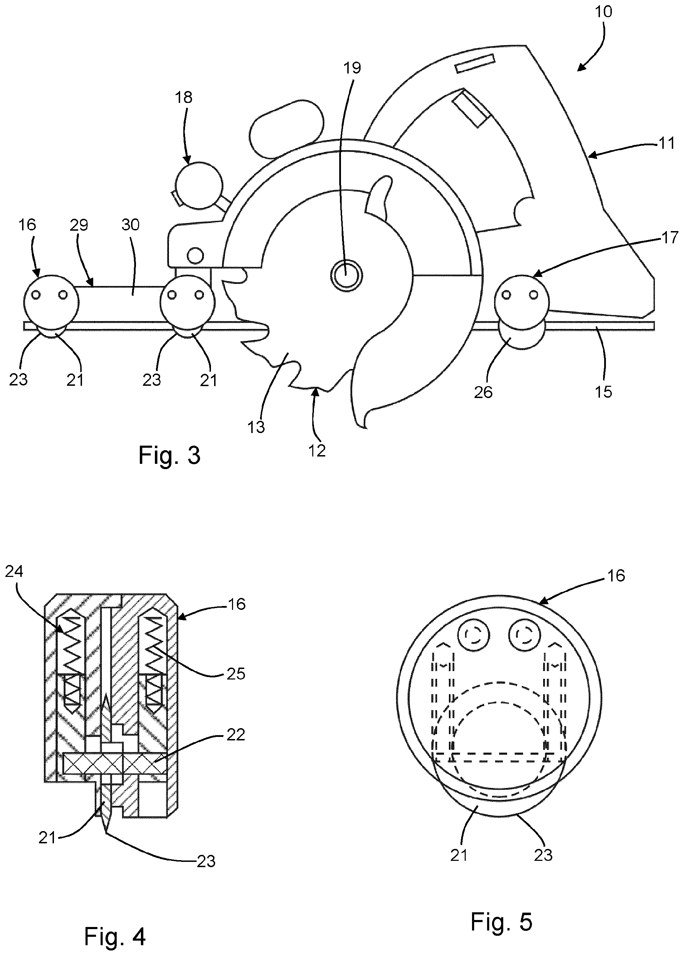

- la figure 3 est une vue de profil de la scie de la figure 1 ;
- la figure 4 est une vue de détail d'un élément de guidage d'une machine d'usinage selon la présente invention ;
- la figure 5 est une vue de détail d'un autre élément de guidage d'une machine d'usinage selon l'invention ;

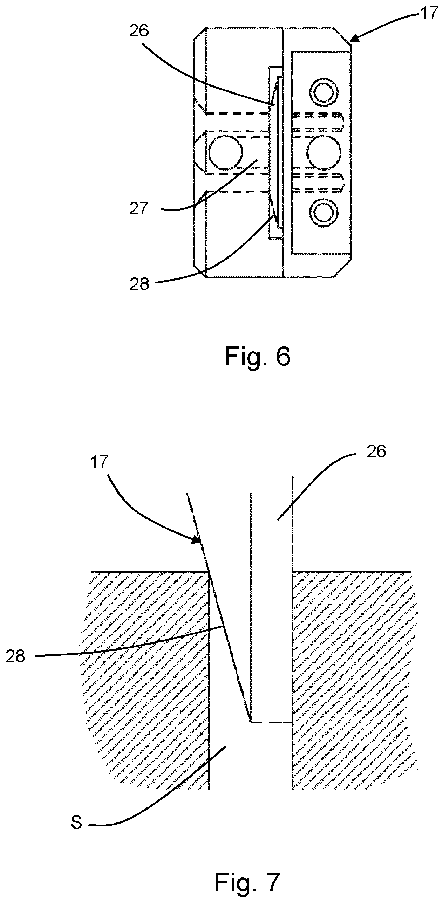

- la figure 6 est une vue en coupe de l'élément de guidage de la figure 5 ; et
- la figure 7 est une vue agrandie d'une partie de l'élément de guidage de la figure 6.

### MODE DE REALISATION DE L'INVENTION

Les figures illustrent un mode de réalisation dans lequel la machine d'usinage est une scie circulaire électroportative. Le principe de l'invention peut être appliqué à un grand nombre de machines d'usinage en général et de machines de coupe en particulier, dans lesquels soit l'outil doit être déplacé de façon rectiligne par rapport à la pièce à usiner, soit la pièce à usiner doit être déplacée de façon rectiligne par rapport à l'outil de coupe.

Ces machines peuvent être toutes sortes de scies telles que des scie à format, des scies circulaires, des scies à ruban, des scie sauteuses, etc. dans lesquelles l'outil d'usinage est une lame. D'autres types de machines d'usinage utilisant d'autres outils d'usinage pourraient également être utilisés.

En référence aux figures, la machine d'usinage 10 de l'invention est représentée sous la forme d'une scie circulaire électroportative 11. Elle comporte un outil d'usinage 12 réalisé sous la forme d'une lame 13 agencé pour couper une pièce à découper. La scie 11 comporte en outre un moteur 14 agencé pour actionner la lame 13, et un plateau 15 agencé pour être en appui contre la pièce à couper pendant l'utilisation de la scie. Généralement, la lame 13 traverse le plateau 15 de sorte que le plateau permet un appui stable contre la pièce à couper et de sorte que la lame 13 pénètre dans la matière de la pièce pour la couper.

La scie comporte en outre un élément de guidage amont 16 et un élément de guidage aval 17 qui sont décrits en détail ci-dessous. Selon un mode de réalisation avantageux, la scie 11 comporte en outre un élément d'alignement 18 également décrits en détail plus bas.

Selon le mode de réalisation illustré par les figures, la lame 13 de la scie 11 a la forme d'un disque denté. Cette lame pivote autour d'un axe de rotation 19 perpendiculaire à un plan 20 de la lame. Bien que la lame 13 ait une certaine épaisseur, typiquement de 3 ou 4 mm, il est fait mention ici « du plan » de la lame pour définir n'importe lequel des plans contenus dans cette lame et parallèle à ses bords. De façon bien connue de l'homme du métier, une lame de scie circulaire est généralement formée d'un flasque dans lequel sont réalisés des dents et sur lesquels sont fixées des plaquettes de dents. De profil, les dents ne sont généralement pas alignées entre elles. Le bord externe d'une dent sur deux est contenu dans une plan et le bord externe des autres dents est également contenu dans un autre plan. L'épaisseur d'une lame de scie est définie comme la distance la plus grande entre les plans définis par les bords externes des dents. Cette épaisseur correspond à la largeur d'un sillon S formé par le passage de la lame dans la matière de la pièce à couper. « Le » plan ou un plan de la lame est défini comme n'importe lequel des plans parallèles à l'un des plans contenant le bord externe d'un ensemble de dents de la lame et contenus entre les deux plans externes de cette lame. L'intersection de la lame avec la pièce à couper définit un trait de coupe ayant l'épaisseur de la lame de scie. Le passage de la lame de scie dans la pièce à découper définit un sillon S.

Selon une variante non illustrée, la machine d'usinage pourrait être une scie de type scie sauteuse dont la lame rectiligne effectue un mouvement de va-et-vient. De manière similaire, la lame définit un plan.

L'élément de guidage amont 16 se trouve en amont de la lame 13, dans une zone de la pièce à couper qui n'a pas encore été atteinte par la lame. Selon un mode de réalisation avantageux, l'élément de guidage amont comporte deux roulettes 21 pivotant autour d'un axe de rotation 22. Ces roulettes 21 ont une zone tranchante 23 sur leur périphérie et dépassent du plateau 15 de la machine d'usinage.

Selon un premier mode de réalisation, les axes 22 des roulettes 21 sont pressées au moyen d'un élément élastique 24 tel qu'un ou plusieurs ressorts 25 ou un élément pneumatique ou hydraulique, en direction de la surface de la pièce à couper. La zone tranchante 23 des roulettes, de même que le ou les ressorts 25 agissant sur leur axe 22 impliquent que les roulettes pénètrent légèrement dans la matière de la pièce à couper.

Selon un deuxième mode de réalisation, les axes des roulettes sont fixes et les roulettes dépassent légèrement du plateau. Ce mode de réalisation peut être particulièrement intéressant pour des matériaux tendre tel que des panneaux de plâtre notamment.

Selon un troisième mode de réalisation il est possible de combiner les deux modes de réalisation précédents. Dans ce cas, les roulettes peuvent être pressées vers la pièce à couper au moyen de ressorts dans un premier mode d'utilisation et peuvent être bloquées dans une position déterminée au moyen d'un organe mécanique de verrouillage (non représenté). Cet organe mécanique de verrouillage peut bloquer les roulettes en position rentrée, dans laquelle les roulettes ne dépassent pas du plateau, ou en position sortie, dans laquelle elles dépassent des plateaux. Le mode d'utilisation des roulettes, à savoir bloquées en position rentrée, libres et contraintes par un ou des ressorts, ou bloquées en position sortie, dépend de l'utilisation de la machine et de la matière usinée.

La zone tranchante 23 des roulettes définit un plan coplanaire avec le plan 20 de la lame de la machine d'usinage. Selon une variante dans laquelle l'élément de guidage amont 16 comporte deux roulettes, la zone tranchante de chaque roulette définit un plan. Les plans des deux roulettes sont parallèles entre eux. Selon un mode de réalisation, ces plans peuvent être confondus l'un avec l'autre. Selon un autre mode de réalisation, ils peuvent être décalés l'un par rapport à l'autre d'une largeur sensiblement égale à la largeur de la lame de scie. Selon cette variante, le plan de l'une des roulettes est aligné avec l'un des bords de la lame de scie et le plan de l'autre roulette est aligné avec l'autre bord de la lame de scie. Il est toutefois également possible de prévoir que les plans des bords des roulettes soient confondus ou espacés l'un de l'autre d'une largeur plus petite ou plus grande que la largeur de la lame de scie.

Le fait que les roulettes 21 pénètrent légèrement dans la matière de la pièce à découper évite que la scie ne glisse sur cette pièce. De plus, du fait de la présence d'une zone tranchante sur les roulettes, la matière de la pièce est légèrement coupée en amont de la lame de scie, ce qui assure un guidage optimal de la lame et de la scie et diminue le risque d'éclats.

L'élément de guidage aval 17 se trouve en aval de la lame de scie, soit dans la zone de la pièce à couper qui a déjà été coupée par cette lame. Dans un mode de réalisation préféré, cet élément de guidage aval comporte également une roulette, dite roulette d'appui 26. Cette roulette d'appui pivote autour d'un axe 27 parallèle à l'axe de rotation 22 des roulettes amont. La roulette d'appui 26 comporte deux faces planes formant deux disques parallèles et concentriques de diamètres différents. Ces disques sont reliés entre eux par une courbe formant un biseau 28.

Selon un mode de réalisation préféré, l'épaisseur de la roulette d'appui 26 est plus grande que la largeur de la lame de scie ou du sillon S réalisé par le passage de la lame de scie dans la pièce à couper. L'une des faces de la roulette d'appui est de préférence alignée avec l'un des bords de la lame de scie. Le biseau 28 s'étend en direction du plan contenant le bord opposé de la lame de scie. Du fait que la largeur de la roulette d'appui 26 est supérieure à la largeur du sillon et du fait de la présence du biseau 28, le biseau est toujours en appui contre l'arrête formée par le sillon et la surface de la pièce à couper et contraint la roulette d'appui 26 en direction du flanc opposée du sillon. De cette manière, l'élément de guidage aval 17 est toujours simultanément en contact avec les deux côtés du sillon, ce qui empêche le jeu au niveau de l'arrière de la machine d'usinage, assurant ainsi un guidage optimal de la roulette d'appui dans le sillon et empêchant la scie de dévier de sa trajectoire.

Selon un mode de réalisation, la position de l'élément de guidage aval 17 est toujours la même et une partie de la roulette d'appui 26 dépasse toujours du plateau 15. Dans ce cas, l'axe 27 de cette roulette d'appui 26 est immobile.

Selon un autre mode de réalisation, l'axe 27 de la roulette d'appui 26 peut être monté sur un élément mobile et contraint par un élément élastique tel qu'un ou plusieurs ressorts ou des éléments pneumatiques ou hydrauliques. Comme dans le cas des roulettes amont, la présence d'un ressort assure un positionnement optimal de la roulette d'appui par rapport au sillon. Par ailleurs, cela permet de compenser les défauts de planéité de la pièce à couper.

Il est également possible de prévoir un organe de verrouillage (non représenté) de la roulette d'appui, par exemple en position complètement rentrée, dans laquelle elle ne dépasse pas du plateau, ou en position sortie dans laquelle elle dépasse du plateau d'une distance constante. Ceci permet de déplacer la roulette d'appui à volonté de façon à ce qu'elle dépasse du plateau ou au contraire, qu'elle soit rétractée.

Le fait de pouvoir rétracter les éléments de guidage de façon à ce qu'ils n'interagissent pas avec la pièce à découper peut être intéressant par exemple dans le cas où la scie est de type scie sauteuse. Selon une utilisation, la scie sauteuse est utilisée pour suivre une courbe non rectiligne et les éléments de guidage sont rétractés. Selon une autre utilisation, la scie sauteuse est utilisée pour réaliser une coupe rectiligne, auquel cas, les éléments de guidage sont déployés.

Selon une variante, il est possible de prévoir une, deux ou plus de deux roulettes d'appui jouant le rôle d'élément de guidage aval. Il est également possible de réaliser un élément de guidage non pas sous forme de roulettes, mais sous une autre forme telle qu'une lame, un élément en forme de V, etc.

Il est également possible de prévoir un réglage latéral de la position des roulettes, que ce soit des roulettes amont ou d'appui. Ce réglage latéral permet d'adapter les positions des roulettes à la largeur de la lame de scie par exemple ou plus généralement de l'outil d'usinage. Ceci peut être particulièrement intéressant dans le cas où l'outil de coupe peut avoir une variété de largeurs différentes Il est possible d'utiliser deux roulettes d'appui, l'une des roulettes d'appui étant disposée de façon à ce qu'elle prenne appui contre le flanc ou l'arrête d'un côté du sillon formé par l'usinage de la pièce, et l'autre roulette d'appui étant agencée pour qu'elle prenne appui contre une arrêt opposée de ce sillon.

Les plans de la roulette d'appui et des roulettes amont et de la lame de scie sont parallèles entre eux, le terme parallèle englobant ici le terme confondu. La lame ne peut alors pas dévier de sa trajectoire rectiligne.

L'élément d'alignement 18 comporte avantageusement un faisceau laser ayant une largeur sensiblement constante et similaire ou inférieure à la largeur de la lame de scie sur une distance comprise entre quelques centimètres et plusieurs mètres, typiquement 4 à 6 mètres. Ce faisceau laser est aligné avec les plans des roulettes amont, de la roulette d'appui et de la lame de scie. La largeur du faisceau laser est de préférence telle qu'il permet un positionnement précis de la scie. En particulier, cette largeur ne doit pas être « trop grande » pour que le point d'arrivée de la coupe ne puisse pas être visé précisément. De tels éléments d'alignement sont connus en soi et ne sont pas décrits plus en détail.

Comme indiqué précédemment, l'invention concerne également un ensemble de guidage 29 indépendant d'une machine d'usinage. Cet ensemble de guidage selon l'invention comporte les éléments de guidage amont 16 et aval 17 tels que décrits précédemment. Cet élément de guidage peut également comporter l'élément d'alignement 18. Il peut en outre comporter un support 30 permettant de lier les éléments de guidage et l'élément d'alignement et permettant de fixer cet ensemble de guidage à une machine d'usinage. En particulier, l'ensemble de guidage 29 peut être fixé sur une machine d'usinage conventionnelle telle qu'en particulier une scie et par exemple une scie circulaire. L'ajout de cet ensemble de guidage sur une machine conventionnelle permet de réaliser des usinages rectilignes avec une telle machine conventionnelle.

Il est clair que le support 30 en particulier et l'ensemble de guidage 29 en général peuvent avoir différentes formes, différentes configurations, différentes dimensions, de façon à être adaptées aux différentes machines auxquelles elles sont destinées. L'élément de guidage amont 16, l'élément de guidage aval 17 et la lame 13 de scie sont positionnés de façon à permettre un usinage rectiligne. A cet effet, les roulettes des éléments de guidage et la lame sont alignées.

La machine d'usinage a été représentée et décrite essentiellement sous forme de scie circulaire électroportative. Une scie de type scie sauteuse a également été décrite, cette scie sauteuse étant également du type machine électroportative.

Le principe de l'invention peut-être également être adapté à une machine d'usinage fixe, comme notamment une scie stationnaire à plateau ou scie à format. Comme dans le mode de réalisation illustré, la scie comporte un élément de guidage amont qui comporte au moins une roulette ayant une zone tranchante et qui est placée en avant de la lame de scie. La scie comporte également un élément de guidage aval formé d'une roulette d'appui comportant une face et un biseau. La face de la roulette d'appui prend appui contre le sillon formé par le passage de la lame dans la pièce à couper et le biseau s'appuie contre une arête du sillon.

Ce mode de réalisation offre les mêmes avantages que ceux offerts par une scie circulaire électroportative. En particulier, il est possible d'effectuer des coupes rectilignes sans devoir prendre appui contre un guide. Ceci peut être particulièrement intéressant notamment pour effectuer des coupes selon une droite qui n'est pas parallèle à un bord de la pièce ou si la pièce à couper n'a pas de bord rectiligne.

La ou les roulettes aval peuvent être placées sur un axe qu'il est possible de déplacer verticalement par rapport au plateau de la scie, de façon à permettre à ces roulettes de dépasser du plateau ou au contraire, d'être sous le plateau, selon l'utilisation de la scie. Un tel axe mobile peut être l'axe d'un inciseur ou un axe similaire à celui d'un inciseur. La ou les roulettes d'appui peuvent être fixées de façon immuable à la machine, de façon à toujours dépasser du plateau. Elles peuvent au contraire être fixées de manière similaire aux roulettes amont, sur un axe dont la position verticale est réglable. La roulette d'appui peut remplacer le couteau diviseur ou être ajoutée en complément au couteau diviseur.

Le principe de l'invention peut être appliqué à toute machine avec laquelle il est souhaitable que la pièce à une usiner se déplace de façon rectiligne par rapport à l'outil d'usinage.

Lors de l'utilisation d'une machine d'usinage selon l'invention, en particulier d'une scie, cette machine est positionnée de façon à ce que la lame 13 soit en regard du point de départ de la coupe à effectuer. L'élément d'alignement 18 est enclenché et la scie est dirigée de façon à ce que le faisceaux laser soit dirigé vers le point de la fin de la coupe. La scie est enclenchée de façon à mettre la lame de scie en mouvement. La machine est ensuite simplement déplacée de façon à ce qu'elle atteigne le point de la fin de la coupe.

Du fait de la présence des éléments de guidage amont et aval, la coupe est parfaitement rectiligne, sans qu'il soit nécessaire d'appuyer le plateau latéral de la machine contre un guide.

## Revendications

1. Machine d'usinage comportant un plateau (15), un outil d'usinage (12) et un moteur (14) agencé pour actionner l'outil d'usinage (12), cette machine d'usinage (10) étant **caractérisée en ce qu'**elle comporte en outre au moins un élément de guidage amont (16) et au moins un élément de guidage aval (17), ledit au moins un élément de guidage amont (16) étant disposé en amont de l'outil d'usinage (12) et comportant une zone tranchante (23) agencée pour être en contact avec une pièce à usiner lors de l'utilisation de la machine d'usinage (10) et **en ce que** ledit élément de guidage aval (17) est disposé en aval de l'outil d'usinage (12) et est agencé pour se déplacer dans un sillon réalisé dans la pièce à usiner lors du passage de l'outil d'usinage dans ladite pièce, cet élément de guidage aval (17) étant simultanément en contact avec les deux côtés dudit sillon et étant agencé pour contraindre ledit élément de guidage aval contre l'un des côtés dudit sillon.

2. Machine d'usinage selon la revendication 1, **caractérisée en ce que** l'élément de guidage amont (16) comporte au moins une roulette (21) pivotant autour d'un axe de rotation (22).

3. Machine d'usinage selon la revendication 1, **caractérisée en ce qu'**elle comporte un élément élastique (24) agencé pour presser ledit élément de guidage amont (16) vers l'extérieur du plateau (15), en direction de la pièce à usiner, de façon à ce que ladite zone tranchante (23) dépasse du plateau (15).

4. Machine d'usinage selon la revendication 3, **caractérisée en ce que** l'élément élastique (24) agit sur l'axe de rotation (22) de la roulette (21).

5. Machine d'usinage selon la revendication 1, **caractérisée en ce que** l'élément de guidage aval (17) comporte une roulette d'appui (26) pivotant autour d'un axe de rotation (27) de la roulette d'appui.

6. Machine d'usinage selon la revendication 5, **caractérisée** la roulette de l'élément de guidage aval (17) comporte deux faces planes formant deux disques parallèles et concentriques de diamètres différents, les disques étant reliés entre eux par un biseau (28).

7. Machine d'usinage selon la revendication 1 ou 5, **caractérisée en ce que** la roulette d'appui (26) de l'élément de guidage aval (17) a une largeur supérieure à la largeur de l'outil d'usinage (12).

8. Machine d'usinage selon la revendication 5, **caractérisée en ce que** la roulette d'appui (26) a une largeur supérieure à la largeur de l'outil d'usinage, **en ce que** l'une des faces de la roulette d'appui (26) est agencée pour prendre appui contre un côté du sillon et **en ce que** le biseau (28) de la roulette d'appui est agencée pour prendre appui contre une arrête formée par le sillon et par une face de la pièce à usiner.

9. Machine d'usinage selon la revendication 1, **caractérisée en ce qu'**elle comporte un élément d'alignement (18) agencé pour positionner l'outil d'usinage le long d'une droite définissant la coupe à réaliser dans la pièce à usiner.

10. Machine d'usinage selon la revendication 9, **caractérisée en ce que** l'élément d'alignement (18) comporte un faisceau laser.

11. Machine d'usinage selon l'une quelconque des revendications précédentes, **caractérisée en ce que** cette machine est une scie (11) et **en ce que** l'outil d'usinage est une lame (13).

12. Ensemble de guidage pour machine d'usinage comportant un plateau (15), un outil d'usinage et un moteur (14) agencé pour actionner l'outil d'usinage (12), cet ensemble de guidage (29) étant **caractérisé en ce qu'**il comporte au moins un élément de guidage amont (16), et au moins un élément de guidage aval (17), ledit au moins un élément de guidage amont (16) comportant une zone tranchante (23) agencée pour être en contact avec une pièce à usiner lors de l'utilisation de la machine d'usinage et **en ce que** ledit élément de guidage aval (17) est agencé pour se déplacer dans un sillon réalisé dans la pièce à couper lors du passage de l'outil d'usinage (12) dans ladite pièce, cet élément de guidage aval (17) étant simultanément en contact avec les deux côtés dudit sillon et étant agencé pour contraindre ledit élément de guidage aval contre l'un des côtés dudit sillon.
